# EUROPEAN PATENT APPLICATION

(11) **EP 4 718 206 A1**
(43) Date of publication of application: **01.04.2026**
(21) Application number: 25195416.0
(22) Date of filing: 12.08.2025
(51) Int. Cl.: G06F 1/16, G06F 3/01, G06F 3/147, G09F 9/30

(54) **SYSTEMS AND METHODS FOR CONTROLLING FLEXIBLE DISPLAYS**

(30) Priority: 25.09.2024 US 202418895818
(71) Applicant: INTEL Corporation, Santa Clara, CA 95054 (US)
(72) Inventor: LAWRENCE, Sean J. W., Bangalore (IN)
(74) Representative: Rummler, Felix

(57) **Abstract**

Systems and methods for controlling flexible displays are disclosed herein. An example apparatus includes interface circuitry; machine-readable instructions; and at least one processor circuit to at least one of instantiate or execute the machine-readable instructions to determine a distance of a user relative to a display screen based on outputs of a sensor, the sensor in communication with one or more of the at least one processor circuit; determine a curvature radius of the display screen based on the user distance; and cause an actuator to adjust a curvature of the display screen based on the curvature radius.

## Description

### BACKGROUND

Some displays enable a screen to be adjusted between, for example, a flat panel state and a curved or bent state. A user may wish to change the curvature of the display screen based on, for example, a type of content being presented on the screen.

### BRIEF DESCRIPTION OF THE DRAWINGS

FIG. 1 is a block diagram of an example system including example flexible screen control circuitry that operates to control curvature and/or orientation of a display screen of a compute device.
FIG. 2 is a block diagram of an example implementation of the flexible screen control circuitry of FIG. 1.
FIGS. 3-9 illustrate example scenarios and corresponding states of a flexible display screen as determined by the flexible screen control circuitry of FIG. 2.
FIG. 10 is a flowchart representative of example machine-readable instructions and/or example operations that may be executed, instantiated, and/or performed by example programmable circuitry to implement the flexible screen control circuitry of FIG. 2.
FIG. 11 is a block diagram of an example processing platform including programmable circuitry structured to execute, instantiate, and/or perform the example machine-readable instructions and/or perform the example operations of FIG. 10 to implement the flexible screen control circuitry of FIG. 2.
FIG. 12 is a block diagram of an example implementation of the programmable circuitry of FIG. 11.
FIG. 13 is a block diagram of another example implementation of the programmable circuitry of FIG. 11.

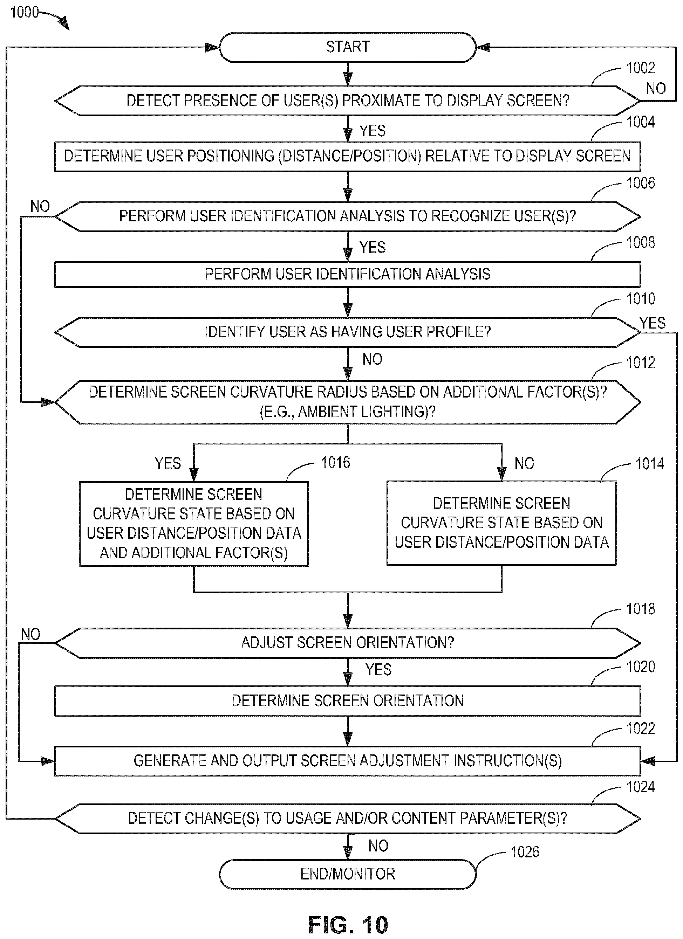

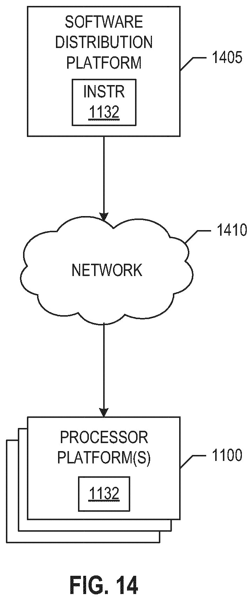

FIG. 14 is a block diagram of an example software/firmware/instructions distribution platform (e.g., one or more servers) to distribute software, instructions, and/or firmware (e.g., corresponding to the example machine-readable instructions of FIG. 10) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Some displays enable a screen to be adjusted between, for example, a flat panel state and a curved, bent, or flexed state. A user's viewing experience with respect to content presented on the display screen can change based on whether the screen is flat or curved and, when curved, the degree of curvature of the screen. A user may wish to change the degree of curvature of the display screen based on, for example, a type of content being presented on the screen and/or a distance of the user from the screen. For instance, a user may prefer the screen to have a high degree of curvature when the user is sitting close to the screen and substantially aligned with the center of the display screen while playing a video game. In particular, a curved screen can reduce distortion of content at the edges of the display screen as compared to if the screen is flat, thereby extending the user's peripheral vision, creating a larger perceived field of view by the user, and providing a more immersive viewing experience for the user while playing the video game. However, in other instances, the user may prefer less curvature of the screen, such as when the user is typing in a word processing document. Further, in other instances, the flat panel state of the display screen can provide for improved visibility (e.g., less distortion) over the curved state, such as when the user is watching a movie and sitting farther from the screen, when multiple people are viewing content on the screen at the same time and not everyone is aligned with a center of the screen, etc. Further, ambient lighting conditions can affect visibility when the display screen is curved, as curved screens may be more susceptible to reflections from light source(s) in the environment.

Some known flexible displays can be manually adjusted by the user to change the degree of curvature of the display screen. For instance, the user can adjust (e.g., bend or flatten) the screen by applying force via handles coupled to a housing of the display. Some known flexible displays provide for automated adjustment of the degree of curvature of the screen via, for instance, a remote control that controls an actuator (e.g., a motor) in response to a user input. However, adjusting the screen curvature manually or via a remote control input each time the type of content being presented changes, the ambient lighting changes, and/or, more generally, the user's viewing preference changes can be cumbersome for the user and/or place undue wear on the display.

Disclosed herein are example systems and methods that automatically and adaptively adjust curvature (e.g., a radius of an arc formed by the curved screen) of a display screen based on factors such as user position relative to the screen, content presented on the screen, ambient lighting, user preferences, etc. Some examples disclosed herein analyze outputs of sensor(s) (e.g., camera(s), microphone(s), light sensor(s), etc.) associated with the display and/or a compute device in communication with the display to determine a usage context for the display screen. The usage context can be indicative of, for example, a number of users viewing the screen, a distance of the user(s) from the screen, ambient lighting conditions, etc. Some examples disclosed herein analyze data indicative of, for example, application usage by the compute device, a type of content being presented, inputs received via peripheral input devices, etc. to determine a content context associated with the display screen. Examples disclosed herein determine a screen curvature state for the display screen, namely, whether the display screen should be in a flat state or a curved state to facilitate the viewing experience by the user(s) based on the parameter(s) indicative of the usage context and/or the content context. Examples disclosed herein can determine that the display screen can be placed in a flat state to reduce distortion of content when the user is watching a movie and farther from the screen. Examples disclosed herein can determine that the display screen should move from the flat state to a curved state to provide an increased perceived field of view with respect to the user's peripheral vision and, thus, a more immersive experience when the user is playing a video game and sitting closer to the display screen. In examples in which the screen is to be placed in the curved state, examples disclosed herein determine a curvature value for the screen, where curvature is defined as a radius of an arc formed by the curved screen and, thus, is referred to herein a curvature radius (e.g., 1800R, 2300R, 4000R, where "R" refers to radius measured in millimeters). In some examples, an orientation of the screen can be adjusted (e.g., the screen can be rotated about a vertical axis and/or a horizontal axis to adjust screen angle, and/or in some examples, the screen can be turned between a horizontal orientation and a vertical orientation). Examples disclosed herein can additionally or alternatively determine an orientation of the screen based on the data associated with the usage context and/or the content context.

Examples disclosed herein output instructions to cause the display to adjust (e.g., via one more actuators of the display) the screen curvature state (e.g., a flat state or a curved state, and a curvature radius when in the curved state) and/or the screen orientation based on analysis of the usage and/or content parameters. Examples disclosed herein monitor the usage and/or content parameter(s) over time to detect changes in user screen interactions, content presentation, ambient lighting conditions, etc. Based on the changes, examples disclosed herein determine whether adjustment(s) to the screen curvature and/or screen orientation are warranted and cause the display to implement any such adjustments. Thus, examples disclosed herein dynamically respond to changes associated with display screen use and/or operation by determining the effects of such changes on user viewing experience and automatically adjusting the curvature and/or orientation of the display screen.

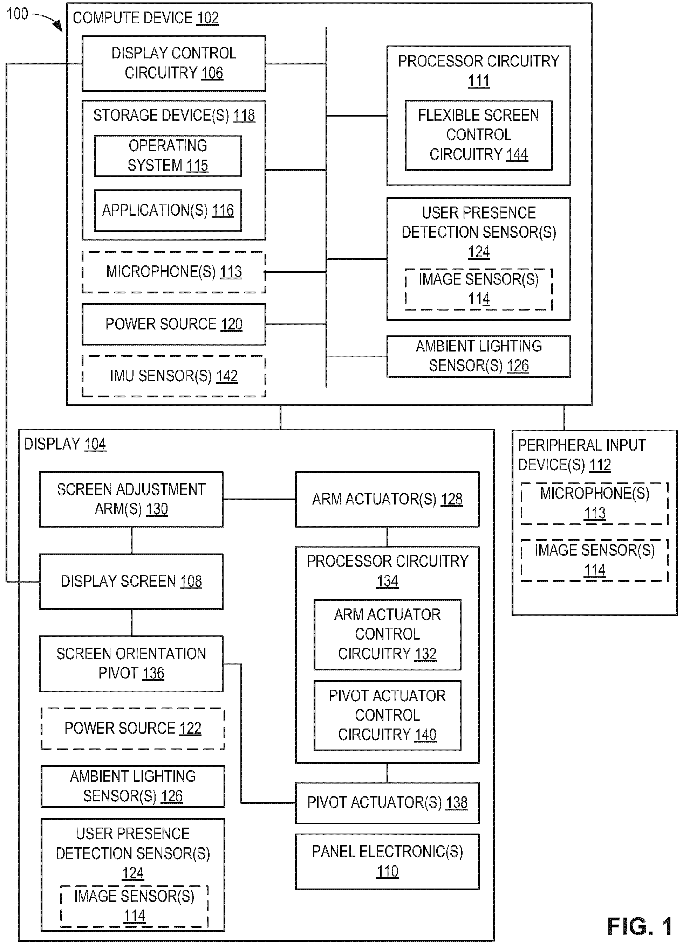

FIG. 1 illustrates an example system 100 including a compute device 102 and a display 104 for presenting content output by the compute device 102. In some examples, the compute device 102 is personal computing (PC) device such as a laptop, a desktop, an all-in-one PC, etc. The display 104 is communicatively coupled to the compute device 102 (e.g., via a wired coupling). The compute device 102 can include other types of electronic devices. In some examples, the display 104 and one or more components of the compute device 102 are within a same housing.

The example compute device 102 includes display control circuitry 106 to cause digital content (e.g., graphical user interface(s), videos, electronic games) to be presented via a display screen 108 of the display 104. The display 104 includes panel electronics 110, or a circuit board including hardware such as a timing controller to provide for output of graphics via the display screen 108. In some examples, the display screen 108 is a touch screen and a user provides inputs to the compute device 102 via the display screen 108 using his or her fingers.

In some examples, one or more peripheral input devices 112 are communicatively coupled to the compute device 102 and a user provides inputs to the compute device 102 via the peripheral input device(s) 112. The peripheral input device(s) 112 can include a keyboard, a mouse, a trackpad, etc. In some examples, the peripheral input device(s) 112 include microphone(s) 113, etc. In some examples, the peripheral input device(s) 112 include image sensor(s) (e.g., camera(s)) 114. In some examples, the compute device 102 and/or the display 104 includes the microphone(s) 113 and/or the image sensor(s) 114, as illustrated in FIG. 1.

The compute device 102 includes processor circuitry 111. The processor circuitry 111 executes machine-readable instructions (e.g., software) including, for example, an operating system 115 and/or other user application(s) 116 installed on the compute device 102, to interpret and output response(s) based on the user input event(s) (e.g., mouse input(s), keyboard input(s), touch event(s), etc.) provided by a user. The operating system 115 and the user application(s) 116 are stored in one or more storage devices 118. The compute device 102 of FIG. 1 includes a power source 120 such as a battery to provide power to the processor circuitry 111 and/or other components of the compute device 102. In some examples, the power source 120 provides power to the display 104; in other examples, the display 104 includes a separate power source 122.

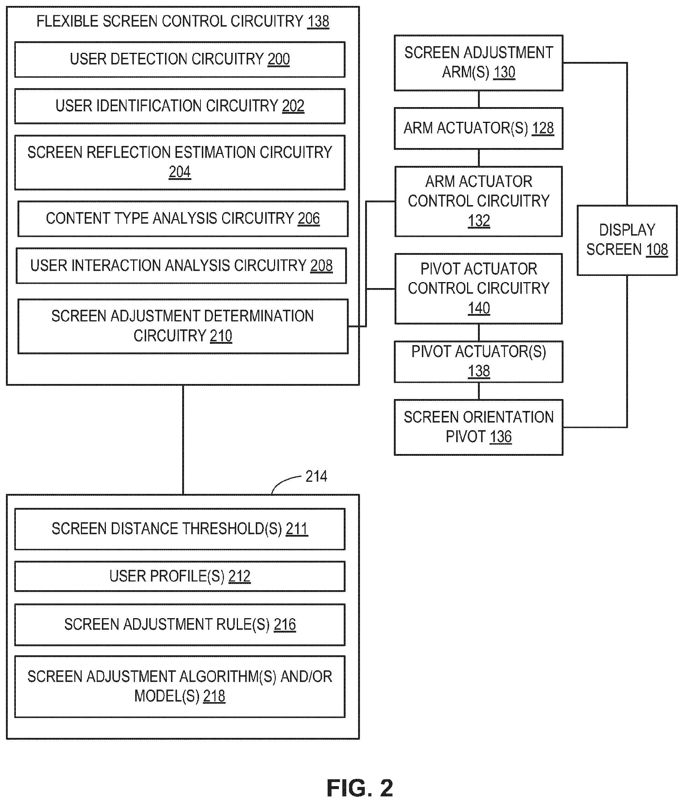

The example compute device 102 of FIG. 2 includes user presence detection sensor(s) 124. The user presence detection sensor(s) 124 can include time-of-flight sensor(s), radar-based user presence detection sensor(s), infrared-based user presence detection sensor(s), vision-based user presence detection sensor(s) (e.g., the camera(s) 114), and/or combinations thereof. The user presence detection sensor (s) 124 can be calibrated to detect a presence of user(s) of the compute device 102 within a threshold distance of the sensor(s) 124, such as four feet, two feet, etc. In examples in which the user presence detection sensor(s) 124 include time-of-flight sensors, the user presence detection sensor(s) 124 can be calibrated to emit light at periodic intervals, such as every two seconds, every five seconds, etc. to identify changes in user presence.

In some examples, the image sensor(s) 114 of the compute device 102 and/or the display 104 serve as the user presence detection sensor(s) 124. For example, the image sensor(s) 114 can include a front-facing camera having a field of view facing a user who is interacting with the display screen 108. In some examples, the user presence detection sensor(s) 124 are part of the display 104 (e.g., when the display is separate from a housing of the compute device 102).

In some examples, the compute device 102 and/or the display 104 includes ambient light sensor(s) 126. In some examples, image data generated by the image sensor(s) 114 can be analyzed by, for example, the processor circuitry 111 of the compute device 102 to determine lighting conditions in the environment in which the display 104 is located. The compute device 102 and/or the display 104 can include other types of sensors, such as inertial measurement unit (IMU) sensors 142.

In the example of FIG. 1, the display screen 108 is flexible such that the display screen 108 can move between a flat or a substantially flat state (i.e., the screen is not curved (i.e., unbent) and instead is a flat panel) to a curved, bent, or flexed state via adjustments to a curvature radius of the display screen 108. The example display 104 of the FIG. 1 includes first actuator(s) 128 (e.g., motor(s)) operatively coupled to movable screen adjustment arm(s) 130. The movable screen adjustment arm(s) 130 can be driven by the first actuator(s) 128 to cause the display screen 108 to bend to move from the flat state to a curved state and to unbend to move from the curved state to the flat state. The example display 104 includes arm actuator control circuitry 132 to generate instructions for the arm actuator(s) 128. In the example of FIG. 1, the arm actuator control circuitry 132 can be implemented by processor circuitry 134 of the display 104. In some examples, the arm actuator control circuitry 132 is implemented by dedicated logic circuitry.

The example display 104 of FIG. 1 enables an orientation of the display screen 108 to adjusted via a screen orientation pivot 136 to which the display screen 108 is coupled. The display screen 108 can rotate about a vertical axis and/or a horizontal axis passing through the screen orientation pivot 136 to adjust an angle of the display screen 108. In some examples, the display screen 108 can rotate (e.g., turn 90°) between a horizontal orientation and a vertical orientation via the screen orientation pivot 136, where in the vertical orientation a direction in which content is presented on the display screen 108 is rotated as well. In the example of FIG. 1, second actuator(s) 138 (e.g., motor(s) can control rotation of the pivot 136 based on instructions from pivot actuator control circuitry 140 and, thus, the orientation of the display screen 108. In other examples, the orientation of the display screen 108 may be fixed in, for example, the horizontal orientation and/or require manual adjustments to change the orientation of the display screen 108. In the example of FIG. 1, the pivot actuator control circuitry 140 can be implemented by the processor circuitry 134 of the display 104. In some examples, the pivot actuator control circuitry 140 is implemented by dedicated logic circuitry.

In the example of FIG. 1, the curvature state of display screen 108 and/or the orientation of the display screen 108 are controlled by flexible screen control circuitry 144. In the example of FIG. 1, the flexible screen control circuitry 144 analyzes outputs by one or more of, for example, the user presence detection sensor(s) 124, the image sensor(s) 114, the ambient light sensor(s) 126, the microphone(s) 113, etc. to determine a usage context with respect to the display screen 108. For example, the flexible screen control circuitry 144 can analyze image data generated by the image sensor(s) 114 to determine a number of users who are viewing the display screen 108, a distance of the user(s) from the display screen, and a position of the user(s) relative to the display screen 108 (e.g., proximate to a center of the display screen 108, offset relative to the center, etc.). In some examples, the flexible screen control circuitry 144 analyzes data associated with the operating system 115 and/or application(s) 116 at the compute device 102 and/or data indicative of user input(s) received via the peripheral input device(s) 112 (e.g., keyboard inputs) to determine a content context for the display screen 108. The content context can indicate whether a user is, for example, regularly interacting with the compute device by inputting data into a word processing document or whether the user is watching a movie on the display screen 108.

The flexible screen control circuitry 144 executes screen curvature logic (e.g., one or more rule(s), algorithm(s), neural network model(s), etc.) based on the usage parameter(s) and/or the content parameter(s) to determine (a) whether the display screen 108 should be in a flat state or a curved state and (b) if the curved state, a curvature radius (e.g., 1800R, 3000R, 4000R) for the display screen 108. For example, the flexible screen control circuitry 144 can determine that the screen 108 should move from the flat state to a first curved state corresponding to a first curvature radius when the flexible screen control circuitry 144 detects one user who is within a threshold distance of the display screen 108. In some examples, the threshold distance corresponds to a minimum degree of curvature of the display screen 108 (e.g., in examples where 4000R is the minimum curvature radius of the display screen 108, the threshold distance can correspond to 4000 mm).

In some examples, the flexible screen control circuitry 144 determines that the display screen 108 should move from the flat state or the first curved state to a second curved state having a second curvature radius that is smaller than the first curvature radius (i.e., such that the display screen 108 is more curved in the second curved state than the first curved state). For instance, when application usage data indicates that the user has switched from using a word processing document to playing a video game, the flexible screen control circuitry 144 can determine that the user's viewing experience may benefit from or be enhanced by increased screen curvature (e.g., to reduce distortion of content at the edges of the display screen 108, and increase a perceived field of view of the display screen 108 by the user by extending content captured within the user's peripheral vision to provide a more immersive viewing experience while playing the video game).

The flexible screen control circuitry 144 can determine that the display screen 108 should be in the flat state (i.e., unbent, not curved) when the user is at a distance that exceeds the threshold distance from the display screen 108. In such examples, the user will be able to view the content on the display screen 108 with less distortion when the display screen is in the flat state than if the display screen 108 was curved due to the distance of the user from the display screen 108 (e.g., because the curved portions may obstruct or distort the user's view when the user is outside the threshold distance from the display screen 108). In some examples, the flexible screen control circuitry 144 can determine that the screen 108 should be in the flat state whenever two or more users are detected, regardless of a distance of the users from the display screen 108 so that one or both users do not experience distortion of the content on the display screen 108.

The example flexible screen control circuitry 144 of FIG. 1 outputs instructions to the arm actuator control circuitry 132 of the display 104 including the curvature radius value for the display screen 108 as determined based on the usage and/or content parameter(s). Based on the instructions from the flexible screen control circuitry 144, the arm actuator control circuitry 132 causes the arm actuator(s) 128 to move the screen adjustment arm(s) 130 so that the display screen 108 is in a curved state having curvature radius determined by the flexible screen control circuitry 144. In some examples, based on the instructions from the flexible screen control circuitry 144, the arm actuator control circuitry 132 causes the arm actuator(s) 128 to move the screen adjustment arm(s) 130 so that the display screen 108 is in the flat state, as determined by the flexible screen control circuitry 144.

In some examples, the flexible screen control circuitry 144 determines an orientation of the display screen 108 based on the usage and/or content parameter(s). For example, based on the screen curvature logic, the flexible screen control circuitry 144 can cause the display screen 108 to rotate about a vertical axis and/or a horizontal axis to adjust an angle of the display scree 108 to, for example, reduce glare, align a center of the display screen with the position of the user, etc. As another example, based on the screen curvature logic, the flexible screen control circuitry 144 can determine that the display screen 108 should be in a vertical orientation when the content parameter(s) (e.g., operating system and/or application event data) indicate that a spreadsheet is being presented on the display screen 108. The flexible screen control circuitry 144 can determine that the display screen 108 should be in a horizontal orientation when the content parameter(s) indicates that a video is being presented on the display screen 108. The flexible screen control circuitry 144 outputs instructions to the pivot actuator control circuitry 140 of the display 104 to cause the pivot actuator(s) 138 to rotate the display screen about the screen orientation pivot 136 to the orientation determined by the flexible screen control circuitry 144. The flexible screen control circuitry 144 can adjust the screen orientation when the display screen 108 is in the flat state or the curved state.

The flexible screen control circuitry 144 monitors for changes with respect to the usage parameter(s) (e.g., user presence, user distance, ambient lighting) and/or content parameter(s) (e.g., application usage, user interaction(s)) over time to determine if changes to the screen curvature and/or orientation are warranted. If the flexible screen control circuitry 144 determines that such change(s) are warranted, the flexible screen control circuitry 144 outputs instructions to the arm actuator control circuitry 132 and/or the pivot actuator control circuitry 140 to cause corresponding adjustment(s) to the display screen 108.

Although in the example of FIG. 1, the flexible screen control circuitry 144 is implemented by the processor circuitry 111 of the compute device 102, in some examples, one or more components of the flexible screen control circuitry 144 is implemented by the processor circuitry 134 of the display 104 and/or instructions executed on one or more cloud-based devices (e.g., one or more server(s), processor(s), and/or virtual machine(s)).

FIG. 2 is a block diagram of the example flexible screen control circuitry 144 of FIG. 1 to determine a screen curvature state (e.g., flat state or curved state and, if the curved state, then the curvature radius) and/or orientation of the display screen 108 of the display 104 of FIG. 1 based on factor(s) or parameter(s) such as user presence, user positioning relative to the display screen 108, ambient lighting, a type of content being presented on the display screen 108, etc. The flexible screen control circuitry 144 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the flexible screen control circuitry 144 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The example flexible screen control circuitry 144 of FIG. 2 includes user detection circuitry 200, user identification circuitry 202, screen reflection estimation circuitry 204, content type analysis circuitry 206, user interaction analysis circuitry 208, and screen adjustment determination circuitry 210. In some examples, the user detection circuitry 200 is instantiated by programmable circuitry executing user detection instructions and/or configured to perform operations such as those represented by the flowchart of FIG. 10. In some examples, the user identification circuitry 202 is instantiated by programmable circuitry executing user identification instructions and/or configured to perform operations such as those represented by the flowchart of FIG. 10. In some examples, the screen reflection estimation circuitry 204 is instantiated by programmable circuitry executing screen reflection estimation instructions and/or configured to perform operations such as those represented by the flowchart of FIG. 10. In some examples, the content type analysis circuitry 206 is instantiated by programmable circuitry executing content type analysis instructions and/or configured to perform operations such as those represented by the flowchart of FIG. 10. In some examples, the user interaction analysis circuitry 208 is instantiated by programmable circuitry executing user interaction analysis instructions and/or configured to perform operations such as those represented by the flowchart of FIG. 10. In some examples, the screen adjustment determination circuitry 210 is instantiated by programmable circuitry executing screen adjustment determination analysis instructions and/or configured to perform operations such as those represented by the flowchart of FIG. 10.

The example user detection circuitry 200 analyzes outputs of the user presence detection sensor(s) 124 to determine whether one or more users are interacting with the compute device 102 and, thus, the display 104. In some examples, the user detection circuitry 200 analyzes image data generated by the image sensor(s) 114 of the compute device 102 and/or the display 104 to detect the presence and number of user(s) proximate to the display 104 based on, for example, facial recognition analysis. In some examples, the user detection circuitry 200 detects user presence based on changes in signals output by, for example, time-of-flight sensor(s). In some examples, the user detection circuitry 200 detects the presence of user(s) based on outputs of the microphone(s) 113 and audio (e.g., voice recognition) analysis.

In examples in which the user detection circuitry 200 detects the presence of one or more users relative to the compute device 102 and/or the display 104, the user detection circuitry 200 generates user positioning information including distance(s) of the user(s) from the display screen 108 and user position(s) relative to the display screen 108 (e.g., centered, more proximate to the right or left sides of the display screen, etc.). For example, the user detection circuitry 200 can use computer vision analysis to determine (e.g., estimate, predict) user distance from and/or user position relative to the display screen 108 based on the image data generated by the image sensor(s) 114. In some examples, the user detection circuitry 200 can estimate user distance from the display screen based on distance ranges associated with, for instance, time-of-flight sensors. The user detection circuitry 200 can compare the (e.g., predicted, estimated) distance(s) of the user(s) from the display screen 108 relative to a screen distance threshold value 211. The screen distance threshold value(s) 211 can be defined by user inputs and stored in a database 214. In some examples, the flexible screen control circuitry 144 includes the database 214. In some examples, the database 214 is located external to the flexible screen control circuitry 144 in a location accessible to the flexible screen control circuitry 144 as shown in FIG. 2.

In some examples, the screen distance threshold value(s) 211 correspond to a minimum degree of curvature of the display screen 108 (e.g., the screen distance threshold value 211 can be 4000 mm when the minimum curvature of the display screen 108 is a curvature radius of 4000R). In some examples, the screen distance threshold value(s) 211 are defined based on other parameters, such as a largest distance of a user from the display screen 108 that does not affect or substantially affect a user's perceived field of view of the display screen 108 and/or result in perceived content distortion as determined by, for example, user testing As disclosed herein, in some examples, the screen adjustment determination circuitry 210 determines to place the display screen 108 in the flat state or the curved state based on whether the user is within (i.e., satisfies) the screen distance threshold 211 of the display screen 108 or exceeds the screen distance threshold 211 from the display screen 108.

In some examples, a user may create a user profile 212 that defines screen curvature state and/or screen orientation preferences for the user. The user profile 212 can include information such as an image of the user or password that associates the user with the user profile 212. The user profile 212 can be stored in the database 214. The user identification circuitry 202 of the example flexible screen control circuitry 144 of FIG. 2 determines whether any of the user(s) detected by the user detection circuitry 200 are associated with the user profile(s) 212 stored in the database 214. For example, the user identification circuitry 202 can attempt to identify the user(s) in the image data generated by the image sensor(s) 114 based on facial recognition analysis. In some examples, the user identification circuitry 202 can identify a user's voice based on audio data collected by the microphone(s) 113 and match the identified user with one of the user profiles 212. In some examples, the user identification circuitry 202 identifies the user based on a user input (e.g., a passcode) associated with the user profile 212. In examples in which the user identification circuitry 202 determines that the user has a user profile 212, the user identification circuitry 202 communicates with the screen adjustment determination circuitry 210 to cause the user settings for screen curvature and/or orientation be implemented based on the settings defined by the user profile 212. Thus, in some examples, if a user profile 212 has been created, the user settings in the user profile 212 can preempt determination of the screen curvature state (e.g., flat state or curved state, curvature radius when in the curved state) and/or orientation by the screen adjustment determination circuitry 210 based on other factors such as user distance from the display screen 108. In other examples, the setting(s) defined in the user profile 212 can be used to refine the determination of the screen curvature radius and/or orientation by the screen adjustment determination circuitry 210 in view of other usage and/or content parameter(s).

The screen reflection estimation circuitry 204 of the example flexible screen control circuitry 144 of FIG. 2 determines ambient lighting conditions in the environment in which the display 104 is located on the display screen 108 and the effects of such ambient lighting conditions on the user's viewing experience. The screen reflection estimation circuitry 204 can determine the ambient lighting conditions based on outputs of the ambient lighting sensor(s) 126 and/or based on analysis of image data of the environment captured by the image sensor(s) 114. In some examples, the screen reflection estimation circuitry 204 identifies light sources (e.g., static light sources) within the field of view of the image sensor(s) 114 based on the image data. Based on the ambient lighting conditions and the orientation of the display screen 108, the screen reflection estimation circuitry 204 determines (e.g., estimates, predicts) a likelihood of light reflection by the display screen 108. For example, the screen reflection estimation circuitry 204 can determine that visibility of certain portions of the display screen 108 may be affected (e.g., reduced) due to reflection of light by those portions the display screen 108 when, for example, the display screen 108 is in a curved state with a certain curvature radius. The screen reflection estimation circuitry 204 can make such determinations based on for example, the location(s) of light(s) in the environment as detected in the image data and the manner in which such light is likely to be reflected by portions of the display screen 108. The screen reflection estimation circuitry 204 can consider the user position(s) relative to the display screen 108 as determined by the user detection circuitry 200 (e.g., whether user is proximate to the center of the display screen 108 or close to one of the sides of the display screen 108) to determine whether the user is likely to be affected by a path of the reflected light.

The example content type analysis circuitry 206 determines or recognizes a type of content being presented on the display screen 108 at a given time based on data and/or events associated with the operating system 115 and/or the application(s) 116, graphics data and/or events associated with the display control circuitry 106, etc. The content type analysis circuitry 206 can determine a type of application being executed by the compute device 102. For example, the content type analysis circuitry 206 identifies whether a video game application or a movie streaming service application is being executed by the compute device 102 based on application event data. The content type analysis circuitry 206 determines the type of content being presented based on the data indicative of the application type, application usage event(s), etc. In some examples, the content type analysis circuitry 206 can analyze screenshots or image data representing data presented on the display screen 108 at a given time and recognizes the content type based on the image analysis.

The example user interaction analysis circuitry 208 determines an amount of user interaction with the compute device 102 based on inputs received via the peripheral input device(s) 112, event(s) associated with the operating system 115 and/or the application(s) 116, the IMU sensor(s) 142, etc. For example, the user interaction analysis circuitry 208 may determine that a user is regularly providing inputs to the compute device 102 via a keyboard or mouse, which can indicate that the user is typing in a word processing document or playing a video game and is likely positioned closer to the display screen 108. In some examples, the user interaction analysis circuitry 208 may determine that the user is only providing inputs at periodic intervals, which can indicate that the user is more likely to be watching a movie and is likely positioned farther from the display screen 108, etc. Thus, in some examples, the analysis by the user interaction analysis circuitry 208 can confirm, verify, or refine the analysis performed by the user detection circuitry 200 and/or the content type analysis circuitry 206.

The screen adjustment determination circuitry 210 of the example flexible screen control circuitry 144 of FIG. 2 uses the parameter(s) identified by one or more of the user detection circuitry 200, the user identification circuitry 202, the screen reflection estimation circuitry 204, the content type analysis circuitry 206, or the user interaction analysis circuitry 208 to determine if the display screen 108 should be in a flat state or a curved state and, if the curved state, then a curvature radius R (e.g., 1800R, 2300R, 4000R) for the display screen 108. In addition, the screen adjustment determination circuitry 210 can consider properties of the display screen 108 such as screen size, minimum and maximum curvature radius values, resolution, etc. Also, in some examples, the screen adjustment determination circuitry 210 determines whether the screen orientation should be adjusted (e.g., rotated about a vertical axis and/or a horizontal axis). As a result of the determination(s), the screen adjustment determination circuitry 210 generates instructions that are output to the arm actuator control circuitry 132 and/or the pivot actuator control circuitry 140 of the display 104 to cause the arm actuator(s) 128 to adjust the curvature of the display screen 108 and/or the pivot actuator(s) 138 to adjust the orientation of the display screen 108.

In some examples, the screen adjustment determination circuitry 210 determines the screen curvature state (e.g., flat or curved, curvature radius when curved) and/or orientation based on (e.g., primarily based on) outputs of the user detection circuitry 200 with respect to whether user(s) are present relative to the display screen 108 and, if so, the distance and position of the user(s) relative to the display screen. Because causing the display screen 108 to move from the flat state to a curved state typically benefits (e.g., enhances) the user's viewing experience when the user is within a certain distance (e.g., the screen distance threshold value 211) of display screen 108 and substantially aligned with a center of the display screen 108 (to reduce distortion effects), the screen adjustment determination circuitry 210 can use the estimated distance of the user(s) from the display screen and/or user position relative to a center of the display screen 108 as the primary factor(s) (and in some instances, the only factor(s)) for determining whether to cause the display screen 108 to bend and/or to adjust the screen orientation. Further, determining the screen curvature state and/or orientation primarily (or only) based on user presence and positioning information (e.g., distance, position relative to the display screen 108) can conserve processing resources. However, in some examples, the screen adjustment determination circuitry 210 uses the usage, content, and/or interaction analysis performed by the screen reflection estimation circuitry 204, the content type analysis circuitry 206, and the user interaction analysis circuitry 208 to refine the determination of the curvature radius and/or to increase the fidelity of the decision-making process performed by the screen adjustment determination circuitry 210 with respect to determining whether the curvature and/or orientation of the display screen 108 should be adjusted.

In some examples, the screen adjustment determination circuitry 210 applies one or more screen adjustment rule(s) 216 to determine the curvature state (e.g., flat state or curved state and, if the curved state, then a curvature radius R) and/or the screen orientation for different usage parameter(s) (e.g., user position, distance) and/or content parameter(s) (e.g., application type, user interaction). The screen adjustment rule(s) 216 can include predefined screen curvature radius values and/or screen orientation values (e.g., horizontal, vertical) for various usage context and/or content context scenarios, display screen sizes, and supported maximum and minimum curvature radius values of the screen (e.g., 1500R-4000R), etc. For example, the screen adjustment determination circuitry 210 can select a rule 216 that applies (or most closely applies) based on a particular scenario defined by the number of user(s) present, the distance(s) of user(s) relative to display screen 108 and the screen distance threshold value 211, the position(s) of the user(s) relative to the display screen 108, the type of content presented on the display screen 108, etc. In examples in which the display screen 108 is to be placed in the curved state, the selected rule 216 can define the curvature radius R value and/or the screen orientation value (e.g., horizontal, vertical) for the combination of factor(s). The screen adjustment rule(s) 216 can be defined based on user input(s). After identifying a corresponding screen adjustment rule 216 based on the usage and/or context parameter(s), the screen adjustment determination circuitry 210 generates instructions including the curvature radius R value and/or the orientation value defined by the selected rule 216. The screen adjustment determination circuitry 210 outputs the instructions to the arm actuator control circuitry 132 and/or the pivot actuator control circuitry 140.

In some examples, the screen adjustment determination circuitry 210 executes one or more screen adjustment algorithms(s) and/or model(s) 218 to determine the screen curvature state and/or orientation for particular usage and/or content contexts associated with the display screen 108. For example, the screen adjustment algorithms(s) 218 can define that screen curvature is a linear function of screen size and factors such as user distance, number of users present, application type, ambient lighting, etc. The screen adjustment algorithms(s) 218 can define coefficient(s) or weight(s) (e.g., where the coefficient(s) and/or weight(s) are determined a priori) for adjusting the screen curvature radius based on the usage and/or content factors. For example, the screen adjustment algorithms(s) 218 can define that the screen curvature radius value should increase (so that the screen is less curved) when the father the user is from the screen distance threshold 211, when there is more than one user present, etc. The screen curvature coefficient(s) can be customized based on features of the display screen 108 such as size, minimum and maximum curvature radius values for the display screen 108, etc. The screen adjustment determination circuitry 210 can generate instructions defining the screen curvature state (flat or curved), the curvature radius R for the curved state, and/or the orientation based on the output(s) of the screen adjustment algorithms(s) 218 for given usage and/or content scenarios.

In some examples, the screen adjustment determination circuitry 210 executes one or more machine learning-based screen adjustment model(s) 218 to determine screen curvature state and/or orientation in view of the usage and/or content factor(s). For example, regression model(s) may be used to determine the screen curvature radius and/or orientation based on the parameter(s) identified by the user detection circuitry 200, the screen reflection estimation circuitry 204, the content type analysis circuitry 206, and/or the user interaction analysis circuitry 208. In some examples, the regression model(s) can include linear functions as discussed in connection with the screen adjustment algorithms(s) 218, where coefficient(s) for adjusting the screen curvature radius can be determined from training and/or calibration and updated over time based on machine learning feedback. For instance, if a user requests (e.g., via a user input) that the curvature radius of the display screen 108 be changed after the curvature radius determined by the screen adjustment determination circuitry 210 is implemented, then the user-preferred screen curvature can be used as feedback to train the machine learning model(s) 218. In some examples, the coefficients can be used in connection with a federated model that is updated by, for example, the display screen manufacturer and/or operating system.

In other examples, other types of neural network models, such as convolutional neural network (CNN) models may be used by the screen adjustment determination circuitry 210 to determine screen curvature state and/or orientation. For example, a CNN model can be trained based on a matrix that includes screen curvature radius values and/or orientation values corresponding to various combinations of number of users, user distance, application type, light reflectance likelihood, etc. The screen adjustment determination circuitry 210 generates instructions including the screen curvature radius values and/or orientation values to drive the respective actuator(s) 128, 138 to control the screen adjustment arm(s) 130 and/or the screen orientation pivot 136.

In some examples, based on the screen adjustment rule(s) 216 and/or the output(s) of the screen adjustment algorithms(s) and/or model(s) 218, the screen adjustment determination circuitry 210 may determine that the display screen 108 should be in the flat state in view of one or more usage and/or content factor(s) such as the user distance from the display screen 108, application type, ambient lighting, a number of user present, etc. In such examples, the screen adjustment determination circuitry 210 determines that causing the display screen 108 to, for example, move from the flat state to the curved state may not result in improved (e.g., optimal) visibility for the user(s) under the current parameters. Rather, placing the display screen 108 in the curved state could negatively impact the viewing experience by, for example, creating a risk of distortion of the content being presented (e.g., due to glare from ambient lighting). In such examples, the screen adjustment determination circuitry 210 outputs instructions to cause the actuator(s) 128 to move the display screen 108 to the flat state (or refrains from outputting instructions so that the display screen 108 remains in the flat state if already in the flat state).

As disclosed herein, in some examples, the display screen 108 can be rotated about a vertical axis and/or horizontal axis via the screen orientation pivot 136. In such examples, the screen adjustment determination circuitry 210 can evaluate whether the ability to rotate the display screen 108 affects the decision as to whether to place the display screen 108 to in a curved state or a flat state. For example, due to the effects of light reflection, the screen adjustment determination circuitry 210 may determine that the display screen 108 should move from a curved state to the flat state. However, because the display screen 108 can rotate about the screen orientation pivot 136, the screen adjustment determination circuitry 210 can revise the decision and instruct the display screen 108 to remain in the curved state but be rotated about the screen orientation pivot 136 to reduce the light reflections. Thus, in some examples, the ability of the display screen 108 to rotate can enable, for example, the display screen 108 to be in a curved state while avoiding the effects of light reflection rather than moving to the flat state.

As disclosed herein, in some examples, after the user detection circuitry 200 detects the presence of a user, the user identification circuitry 202 determines that the user is associated with a user profile 212 that defines user preference(s) for screen curvature state and/or screen orientation. In some such examples, rather than determining the screen curvature and/or orientation based on the usage context (e.g., user position, distance) and/or content context (e.g., application type, user interaction), the screen adjustment determination circuitry 210 generates instructions to cause the arm actuator(s) 128 (via the arm actuator control circuitry 132) to adjust the curvature radius and/or the pivot actuator(s) 138 (via the pivot actuator control circuitry 140) to adjust the orientation of the display screen 108 based on the user setting(s) in the user profile 212. Thus, in some examples, the setting(s) in the user profile(s) 212 override the screen adjustment rule(s) 216 and/or the output(s) that would be obtained via execution of the screen adjustment algorithm(s)/model(s) 218. In other examples, the user profile(s) 212 can be used as another factor in determining, for example, screen curvature coefficient(s) and/or weight(s) defined by the screen adjustment algorithms(s) 218, can be used to train the neural network model(s) 218, etc.

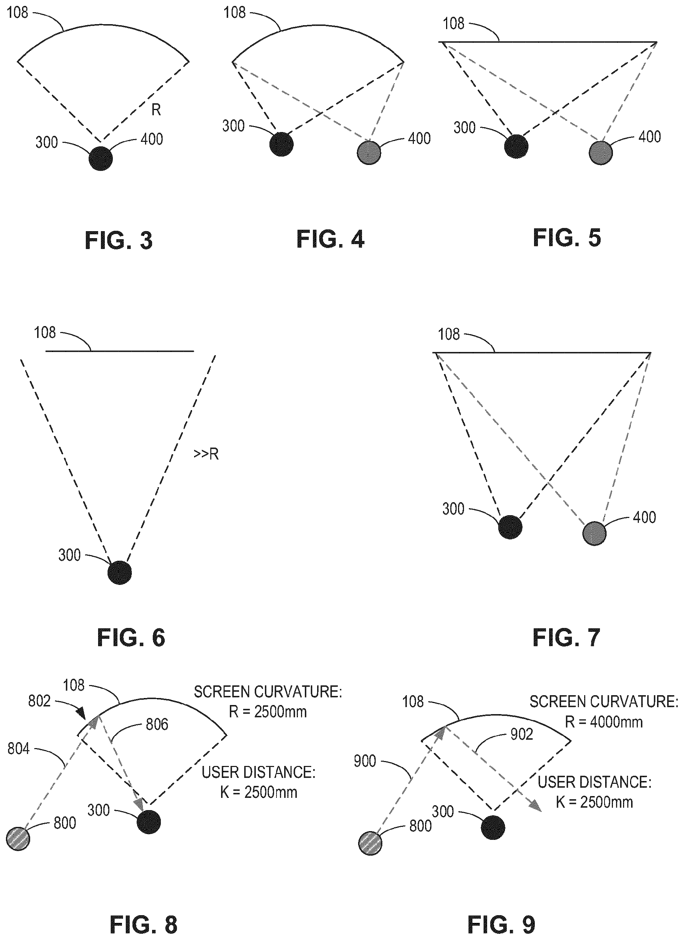

FIG. 3 illustrates an example scenario in which a first user 300 is located within a threshold distance R (i.e., the screen distance threshold 211) of the display screen 108, where *R* corresponds to the minimum degree of curvature of the display screen 108 (e.g., curvature radius *R* = 4000 mm). In such examples, the screen adjustment determination circuitry 210 can determine, based on the screen adjustment rule(s) 216 and/or screen adjustment algorithms(s) and/or model(s) 218, that moving the display screen 108 to a curved state would enhance the viewing experience of the first user 300 (e.g., by reducing distortion of content at the edges, increasing the user's perceived field of view of the display screen 108). Accordingly, the screen adjustment determination circuitry 210 generates and outputs screen adjustment instruction(s) to cause the display screen 108 to move to a curved state. As disclosed herein, the screen adjustment determination circuitry 210 can determine the curvature radius to which the display screen 108 should bend or flex based on, for example, the rules(s) 216, the coefficient(s) associated with the algorithm(s) 218, execution of the neural network model(s) 218, user preference(s) as defined in the user profile(s) 212, etc.

FIG. 4 illustrates an example scenario in which the first user 300 and a second user 400 are both viewing content on the display screen 108 at the same time and both users 300, 400 are within the threshold distance R of the display screen 108. In FIG. 4, the display screen 108 is in a curved state. However, the curved state of FIG. 4 can result in content that appears distorted for each of the users 300, 400 because both users 300, 400 are offset relative to a center of the display screen 108. Accordingly, based on the number of users viewing the display screen 108 and the user positions (and, in some examples, based on other usage and/or context factor(s)), the screen adjustment rule(s) 216 and/or screen adjustment algorithms(s) and/or model(s) 218, the screen adjustment determination circuitry 210 determines that the display screen 108 should move from the curved state of FIG. 4 to the flat state shown in FIG. 5.

In the example of FIG. 6, the user 300 is a distance from the display screen 108 that exceeds the threshold distance R (e.g., where R = 4000 mm, the user is at distance greater than 4000 mm from the display screen 108). In this example, the screen adjustment determination circuitry 210 determines, based on the screen adjustment rule(s) 216 and/or screen adjustment algorithms(s) and/or model(s) 218, that because the distance of the user 300 from the display screen 108 exceeds the screen distance threshold value 211 (i.e. *R*), the user's viewing experience will not benefit from placing the display screen 108 in the curved state. Rather, placing the display screen 108 in the curved state could result in distortion of content when view at the user's distance from the display screen 108. Accordingly, the screen adjustment determination circuitry 210 generates and outputs screen adjustment instruction(s) to cause the display screen 108 to move to the flat state (or remain in the flat state if already in the flat state).

Similarly, in FIG. 7, the first and second users 300, 400 are located at a distance from the display screen 108 that exceeds the threshold distance *R*. Because the users' distances exceed the threshold distance *R*, the screen adjustment determination circuitry 210 determines that the display screen 108 should be in the flat state to provide an improved (e.g., clearer, less distorted) viewing experience for both users 300, 400 as compared to if the display screen 108 was in a curved state.

FIGS. 8 and 9 illustrate the effects of ambient light sources on the determination of a curvature radius for the display screen 108 by the screen adjustment determination circuitry 210 when the display screen 108 is in the curved state. In the example of FIG. 8, the first user 300 is located within the threshold distance R of the display screen (in this example, *R* = 2500 mm (e.g., corresponding a curvature radius of the screen 108) and the user is a distance *K* = 2500 mm from the display screen 108). However, due to a position of a light source 800 relative to the display screen 108, light may reflect off of a curved portion 802 of the display screen 108, as represented by a light reflectance path defined by arrows 804, 806 in FIG. 8. The reflected light can obstruct viewing of content on the display screen 108. Accordingly, in this example and based on the likelihood of light reflectance by the display screen 108, the screen adjustment determination circuitry 210 generates instruction(s) to cause the display screen 108 to reduce the degree of curvature of the display screen 108 as shown in FIG. 9 to mitigate the effects of the light reflection. For example, the screen adjustment determination circuitry 210 can generate instructions for the actuator(s) 128 to move the display screen 108 from a curvature radius of *R* = 2500 mm in FIG. 8 to a curvature radius of *R* = 4000 mm. As shown in FIG. 9, the decreased curvature of the display screen 108 decreases the effects of reflection of light relative to the user 300, as represented by a light reflectance path defined by arrows 900, 902 in FIG. 9. Therefore, in the example of FIG. 9, moving the display screen 108 to a less curved (flatter) state mitigates the impact of the light reflections on the first user 300. However, given the user's proximity to the display screen 108 (i.e., within the screen threshold distance *R*), the first user 300 still benefits from the display screen 108 being in a curved state (e.g., by increasing the user's field of view of the display screen 108).

Table 1, below, sets forth example scenarios and combinations of numbers of users, application/content type and user interaction levels, likelihood of reflection from ambient light sources, whether or not a profile 212 exists for the user, and the recommended screen curvature state (e.g., flat state or curved state and, if the curved state, then a recommended curvature radius output) for the display screen 108 for a given scenario. In Table 1 below, curvature is defined as the radius of the arc formed by the curved screen. Also, the variable *R* represents a screen distance threshold value 211. In some examples, *R* corresponds to the minimum curvature radius of the display screen 108 (e.g., 4000R). In some examples, *R* correspond to a maximum distance threshold of a user from the display screen 108 that provides a field of view of the screen that has, for example, minimal distortion of content at the edges of the display screen as determined by, for instance, user testing. In Table 1, below, the identifier "All" in connection with application/content type and/or interactivity generally refers to applications such as audio player(s) and/or video player(s) for multimedia content, productivity/interactive applications such as a word processing application, a spreadsheet application, a web browser, interactive content such as text, web content, content that is consumed such as videos, movies, etc. The values *K, J, Xₚ₁, X*_{*pn*,} *Xᵥ*, and *X_{g}* in Table represent different curvature radius values.

**Table 1**

| **Example No.** | **No. of users** | **Distance of user(s) from display screen** | **Application/ Content Type/ Interactivity** | **Reflection from Ambient Light Sources** | **User profile exist?** | **Output (Curvature/Flat)** |
|---|---|---|---|---|---|---|
| 1 | 1 | Within *R* | All | None | None | Curvature *K* == distance of user from screen |
| 2 | 1 | Within *R* | All | None | Yes | Curvature *K* == distance of user from screen OR *based on user preference.* |
| 3 | >1 | Greater than *R* | All | None | None | Flat |
| 4 | >1 | Greater than *R* | All | None | Yes | Flat OR *based on user preference.* |
| 5 | 1 | Within *R* | All | Yes | None | Curvature *J* (as close to *K* (distance of user from screen) as possible and minimized reflection) |
| 6 | 1 | Within *R* | All | Yes | Yes | Curvature *J* (as close to *K* (distance of user from screen) as possible and minimized reflection) OR *based on user preference* |
| 7 | 1 | Within *R* | Productivity usage (single application such as a word processing document, spreadsheet) | No | None | Curvature *Xₚ₁* (as close to *K* (distance of user from screen) as possible and optimized for productivity with single app) |
| 8 | 1 | Within *R* | Productivity usage (multiple applications) | No | None | Curvature *Xₚₙ* (as close to *K* (distance of user from screen) as possible and optimized for productivity with multiple apps) |
| 9 | 1 | Within *R* | Video | No | None | Curvature *Xᵥ* (as close to *K* (distance of user from screen) as possible and optimized for video) |
| 10 | 1 | Within *R* | Game | No | None | Curvature *X_{g}* (as close to *K* (distance of user from screen) as possible and optimized for gaming) |

The examples in Table 1 can define the screen adjustment rule(s) 216 and/or be used to implement the screen adjustment algorithms(s) and/or model(s) 218 (e.g., for training purposes, to determine weights or coefficients for adjusting curvature, etc.). In some examples, the screen adjustment determination circuitry 210 further adjusts or redefines the curvature output(s) defined in Table 1 based factors such as display size, amount of reflection, position(s) of user(s) with respect to center of the screen (e.g., closer to one of the edges of the display screen 108, substantially aligned with the center of the display screen 108, etc.), user preferences defined in the user profile(s) 212, etc. Also, although screen orientation is not defined in the examples of Table 1, in some examples, the screen adjustment determination circuitry 210 can determine an orientation for the display screen 108 for the respective scenarios or combinations of usage and/or content parameters.

As shown in Table 1, the screen adjustment determination circuitry 210 determines whether the display screen 108 should be in the flat state or a curved state and, if the curved state, the amount of curvature (i.e., curvature radius) based on parameters or inputs identified by one or more of the user detection circuitry 200, the user identification circuitry 202, the screen reflection estimation circuitry 204, the content type analysis circuitry 206, or the user interaction analysis circuitry 208. As shown in Table 1, when a user is within the distance threshold R of the display screen 108, the user may benefit in certain scenarios from the display screen 108 being in a curved state (e.g., Examples 1, 2, 5-10). Further, within those examples, the screen adjustment determination circuitry 210 may determine that different curvature radius values will provide an enhanced viewing experience based on, for example, whether or not there is light reflection from ambient light source, the type of context being viewed (e.g., video versus game, use of multiple applications versus a single application, etc.). In some examples, the curvature radius value is based on the distance (e.g., estimated distance) of the user from the display screen 108 (e.g., Example 1 in Table 1). In some examples, screen adjustment determination circuitry 210 may select the curvature radius value based on user distance and other factors, such as application type (e.g., Examples 7-10 in Table 1). In some examples, (e.g., Examples 1-3), the screen adjustment determination circuitry 210 applies the curvature radius value regardless of application or content type. In examples in which more than one viewer is viewing the display screen from a distance that exceeds the distance threshold R, the screen adjustment determination circuitry 210 may determine that the display screen 108 should be in the flat position because the flat position will provide a better viewing experience as compared to a curved screen (e.g., because bending the screen may appear to distort the content for the users outside the distance threshold *R*).

Although examples disclosed herein are primarily discussed in connection with, for instance, outputs of sensors from the compute device 102 and/or the display 104 in connection with determining screen curvature radius and/or screen orientation, in some examples, other sources can be used by the screen adjustment determination circuitry 210 to control the flexible display screen 108 in connection with, for example, an edge network. For example, the display 104 can be located in a conference room in which multiple users are viewing the display screen 108 of the display 104. In some such examples, the flexible screen control circuitry 144 can be implemented by, for instance, a server or edge device (instead of, for example, by the processor circuitry 111 of the compute device 102). In some such examples, the flexible screen control circuitry 144 can access outputs of, for example, ambient light sensors located in the conference room and the screen reflection estimation circuitry 204 can determine effects of lighting on the display screen 108 based on the sensor(s) in the room. In some such examples, the flexible screen control circuitry 144 can access data associated with other edges device(s), such as compute devices (e.g., tablets, laptops, smartphones) carried by users in the room and the content type analysis circuitry 206 can determine the type of content being presented on the display screen 108 based on the data from the other edge device(s). Thus, in some examples, the screen adjustment determination circuitry can use data from multiple sources including the compute device and other devices with respect to deciding the screen curvature state (i.e., flat or curved) and/or screen orientation.

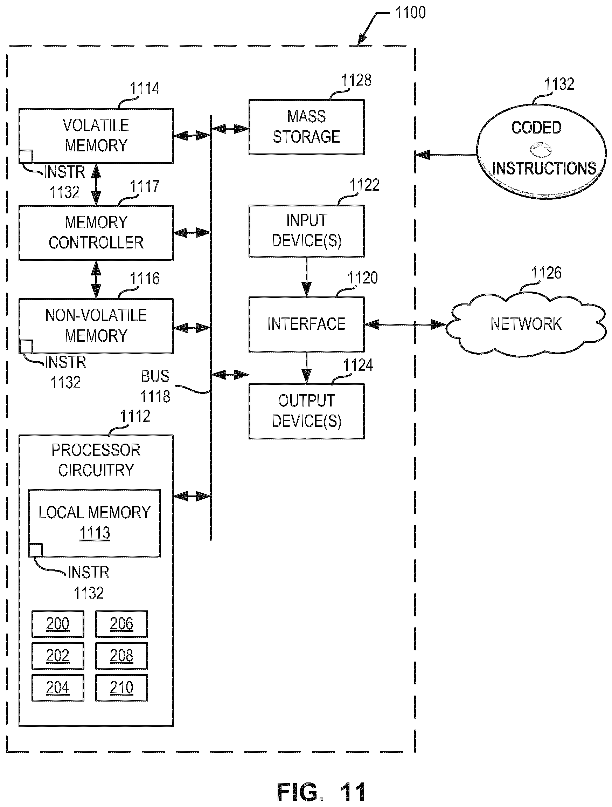

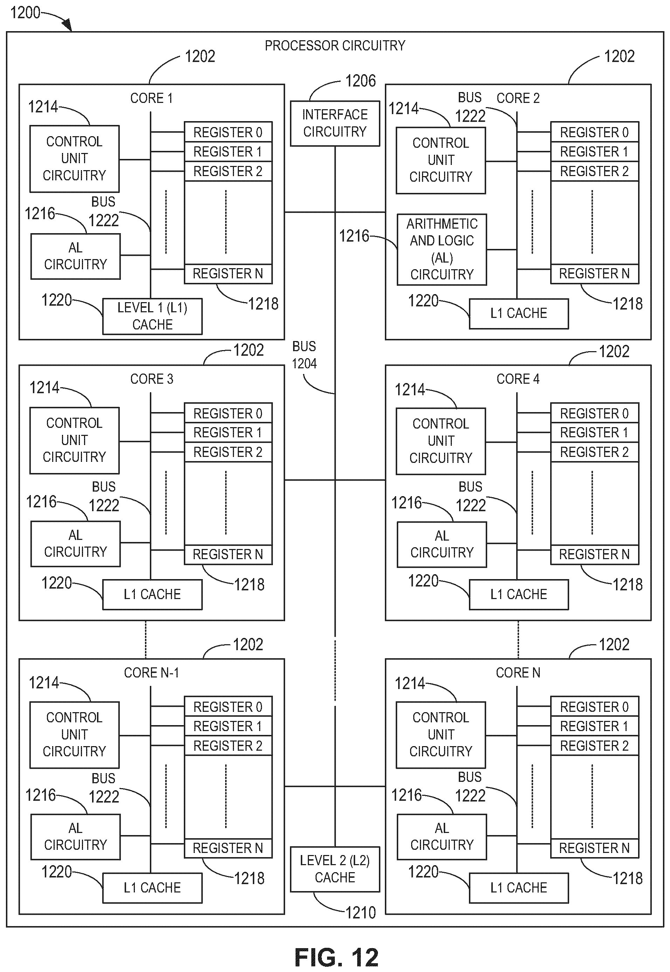

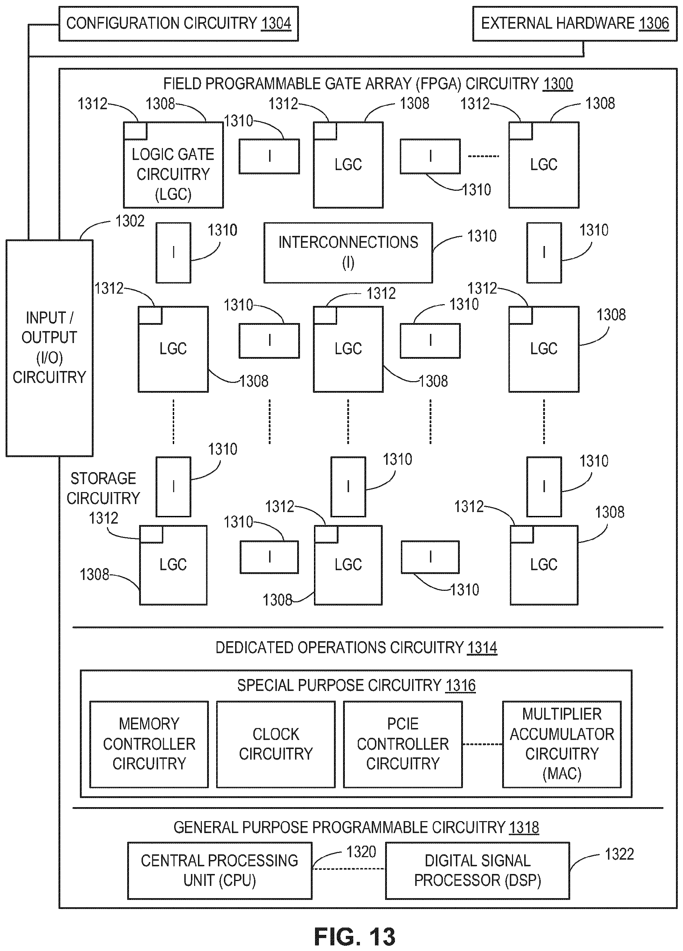

In some examples, the flexible screen control circuitry 144 includes means for detecting a user. For example, the means for detecting may be implemented by the user detection circuitry 200. In some examples, the user detection circuitry 200 may be instantiated by programmable circuitry such as the example programmable circuitry 1112 of FIG. 11. For instance, the user detection circuitry 200 may be instantiated by the example microprocessor 1200 of FIG. 12 executing machine executable instructions such as those implemented by at least blocks 1002, 1004 of FIG. 10. In some examples, the user detection circuitry 200 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the user detection circuitry 200 may be instantiated by any other combination of hardware, software, and/or firmware. For example, the user detection circuitry 200 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine-readable instructions without executing software or firmware, but other structures are likewise appropriate.

In some examples, the flexible screen control circuitry 144 includes means for identifying a user. For example, the means for identifying may be implemented by the user identification circuitry 202. In some examples, the user identification circuitry 202 may be instantiated by programmable circuitry such as the example programmable circuitry 1112 of FIG. 11. For instance, the user identification circuitry 202 may be instantiated by the example microprocessor 1200 of FIG. 12 executing machine executable instructions such as those implemented by at least blocks 1006, 1008, 1010 of FIG. 10. In some examples, the user identification circuitry 202 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the user identification circuitry 202 may be instantiated by any other combination of hardware, software, and/or firmware. For example, the user identification circuitry 202 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine-readable instructions without executing software or firmware, but other structures are likewise appropriate.

In some examples, the flexible screen control circuitry 144 includes means for estimating screen reflection. For example, the means for estimating may be implemented by the screen reflection estimation circuitry 204. In some examples, the screen reflection estimation circuitry 204 may be instantiated by programmable circuitry such as the example programmable circuitry 1112 of FIG. 11. For instance, the screen reflection estimation circuitry 204 may be instantiated by the example microprocessor 1200 of FIG. 12 executing machine executable instructions such as those implemented by at least blocks 1012, 1016 of FIG. 10. In some examples, the screen reflection estimation circuitry 204 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the screen reflection estimation circuitry 204 may be instantiated by any other combination of hardware, software, and/or firmware. For example, the screen reflection estimation circuitry 204 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine readable instructions without executing software or firmware, but other structures are likewise appropriate.

In some examples, the flexible screen control circuitry 144 includes means for analyzing content type. For example, the means for content type analyzing may be implemented by the content type analysis circuitry 206. In some examples, the content type analysis circuitry 206 may be instantiated by programmable circuitry such as the example programmable circuitry 1112 of FIG. 11. For instance, the content type analysis circuitry 206 may be instantiated by the example microprocessor 1200 of FIG. 12 executing machine executable instructions such as those implemented by at least blocks 1012, 1014, 1018, 1020, 1022, 1024 of FIG. 10. In some examples, the content type analysis circuitry 206 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the content type analysis circuitry 206 may be instantiated by any other combination of hardware, software, and/or firmware. For example, the content type analysis circuitry 206 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine-readable instructions and/or to perform some or all of the operations corresponding to the machine readable instructions without executing software or firmware, but other structures are likewise appropriate.

In some examples, the flexible screen control circuitry 144 includes means for analyzing user interaction. For example, the means for user interaction analyzing may be implemented by the user interaction analysis circuitry 208. In some examples, the user interaction analysis circuitry 208 may be instantiated by programmable circuitry such as the example programmable circuitry 1112 of FIG. 11. For instance, the user interaction analysis circuitry 208 may be instantiated by the example microprocessor 1200 of FIG. 12 executing machine executable instructions such as those implemented by at least blocks 1012, 1016 of FIG. 10. In some examples, the user interaction analysis circuitry 208 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the user interaction analysis circuitry 208 may be instantiated by any other combination of hardware, software, and/or firmware. For example, the user interaction analysis circuitry 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine-readable instructions without executing software or firmware, but other structures are likewise appropriate.

In some examples, the flexible screen control circuitry 144 includes means for determining screen adjustment. For example, the means for determining may be implemented by the screen adjustment determination circuitry 210. In some examples, the screen adjustment determination circuitry 210 may be instantiated by programmable circuitry such as the example programmable circuitry 1112 of FIG. 11. For instance, the screen adjustment determination circuitry 210 may be instantiated by the example microprocessor 1200 of FIG. 12 executing machine executable instructions such as those implemented by at least blocks 1012, 1016 of FIG. 10. In some examples, the screen adjustment determination circuitry 210 may be instantiated by hardware logic circuitry, which may be implemented by an ASIC, XPU, or the FPGA circuitry 1300 of FIG. 13 configured and/or structured to perform operations corresponding to the machine-readable instructions. Additionally or alternatively, the screen adjustment determination circuitry 210 may be instantiated by any other combination of hardware, software, and/or firmware. For example, the screen adjustment determination circuitry 210 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine-readable instructions without executing software or firmware, but other structures are likewise appropriate.

While an example manner of implementing the flexible screen control circuitry 144 of FIG. 1 is illustrated in FIG. 2, one or more of the elements, processes, and/or devices illustrated in FIG. 2 may be combined, divided, re-arranged, omitted, eliminated, and/or implemented in any other way. Further, the example user detection circuitry 200, the example user identification circuitry 202, the example screen reflection estimation circuitry 204, the example content type analysis circuitry 206, the example user interaction analysis circuitry 208, and the example screen adjustment determination circuitry 210, and/or, more generally, the example flexible screen control circuitry 144 of FIG. 2, may be implemented by hardware alone or by hardware in combination with software and/or firmware. Thus, for example, any of the example user detection circuitry 200, the example user identification circuitry 202, the example screen reflection estimation circuitry 204, the example content type analysis circuitry 206, the example user interaction analysis circuitry 208, and the example screen adjustment determination circuitry 210, and/or, more generally, the example flexible screen control circuitry 144, could be implemented by programmable circuitry in combination with machine-readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example flexible screen control circuitry 144 of FIG. 2 may include one or more elements, processes, and/or devices in addition to, or instead of, those illustrated in FIG. 2, and/or may include more than one of any or all of the illustrated elements, processes and devices.

A flowchart representative of example machine-readable instructions, which may be executed by programmable circuitry to implement and/or instantiate the flexible screen control circuitry 144 of FIG. 2 and/or representative of example operations which may be performed by programmable circuitry to implement and/or instantiate the flexible screen control circuitry 144 of FIG. 2, are shown in FIG. 10. The machine-readable instructions may be one or more executable programs or portion(s) of one or more executable programs for execution by programmable circuitry such as the programmable circuitry 1112 shown in the example processor platform 1100 discussed below in connection with FIG. 11 and/or may be one or more function(s) or portion(s) of functions to be performed by the example programmable circuitry (e.g., an FPGA) discussed below in connection with FIGS. 12 and/or 13. In some examples, the machine-readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer-readable and/or machine-readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer-readable and/or machine-readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine-readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer-readable storage medium may include one or more mediums. Further, although the example program is described with reference to the flowchart illustrated in FIG. 10, many other methods of implementing the example flexible screen control circuitry 144 may alternatively be used. For example, the order of execution of the blocks of the flowchart may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine-readable instructions described herein may be stored in one or more of a compressed format, an encrypted format, a fragmented format, a compiled format, an executable format, a packaged format, etc. Machine-readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine-readable instructions may be fragmented and stored on one or more storage devices, disks and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine-readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed in whole or in part. Thus, machine-readable, computer-readable and/or machine-readable media, as used herein, may include instructions and/or program(s) regardless of the particular format or state of the machine-readable instructions and/or program(s).

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIG. 10 may be implemented using executable instructions (e.g., computer-readable and/or machine-readable instructions) stored on one or more non-transitory computer-readable and/or machine-readable media. As used herein, the terms non-transitory computer-readable medium, non-transitory computer-readable storage medium, non-transitory machine-readable medium, and/or non-transitory machine-readable storage medium are expressly defined to include any type of computer-readable storage device and/or storage disk and to exclude propagating signals and to exclude transmission media. Examples of such non-transitory computer-readable medium, non-transitory computer-readable storage medium, non-transitory machine-readable medium, and/or non-transitory machine-readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer-readable storage device" and "non-transitory machine-readable storage device" are defined to include any physical (mechanical, magnetic and/or electrical) hardware to retain information for a time period, but to exclude propagating signals and to exclude transmission media. Examples of non-transitory computer-readable storage devices and/ or non-transitory machine-readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer-readable instructions, machine-readable instructions, etc., and/or manufactured to execute computer-readable instructions, machine-readable instructions, etc.

FIG. 10 is a flowchart representative of example machine-readable instructions and/or example operations 1000 that may be executed, instantiated, and/or performed by programmable circuitry to determine a screen curvature state (e.g., flat state or curved state and, if the curved state, a curvature radius) and/or a screen orientation of the display screen 108 of the example display 104 of FIG. 1. The example machine-readable instructions and/or the example operations 1000 of FIG. 10 begin at block 1002, at which the user detection circuitry 200 determines if one or more users 300, 400 are proximate to the display screen 108 of the display 104 (or proximate to the compute device 102 and, thus, the display 104) based on outputs of, for example, the user presence detection sensor(s) 124, the image sensor(s) 114, etc. If the user detection circuitry 200 detects that the user(s) are present, then at block 1004, the user detection circuitry 200 determines positioning information for user(s) relative to the display screen 108. For example, the user detection circuitry 200 can estimate user distance from the display screen 108 and/or user position (e.g., proximate to a center of the display screen 108, proximate to one of the edges of the display screen 108) based on image data generated by the image sensor(s) 114.

In some examples, the user identification circuitry 202 can attempt to identify the user(s) based on, for example, facial recognition analysis using the image data generated by the image sensor(s) 114 (blocks 1008, 1010). In such examples, the user identification circuitry 202 can determine whether the user is associated with one of the user profile(s) 212 saved in the database 214, where the user profile(s) 212 can define user preferences with respect to screen curvature and/or orientation. If the user identification circuitry 202 determines that the user is associated with a user profile 212, the screen adjustment determination circuitry 210 generates and outputs screen adjustment instruction(s) based on the setting(s) defined in the user profile 212 for the recognized user (block 1022). In some examples, at block 1022, the screen adjustment determination circuitry 210 uses the user setting(s) in the user profile 212 to refine or adjust the instructions generated based on other factors such as a type of content being presented on the display screen 108.

In examples in which user identification is not performed or the user is not identified as having a user profile (block 1006, 1010), then at bock 1012, the screen adjustment determination circuitry 210 determines if the screen curvature state (e.g., flat state or curved state) of the display screen 108 should be determined based on other factor(s) or parameter(s) such as ambient lighting, application usage, user activity, etc. In some examples, the screen adjustment determination circuitry 210 determines whether the display screen 108 should be in the flat state or the curved state and the degree of curvature in the curved state based on the user positioning information (e.g., distance from the display screen 108 and position relative to the display screen 108) alone, without consideration of other factors such as ambient lighting or application event data (e.g., to converse processing resources) (block 1014). In this example, the screen adjustment determination circuitry 210 can determine whether the display screen 108 should be in the flat state or the curved state and, if in the curved state, the curvature radius by implementing the screen adjustment rule(s) 216 and/or the screen adjustment algorithm(s) and/or model(s) 218 for the number of users present, the distance(s) of the user(s) from the display screen 108 relative to the screen distance threshold value 211, and/or the position(s) of the user(s) relative to the display screen 108.

In some examples, the screen adjustment determination circuitry 210 determines whether the display screen 108 should be in the flat state or the curved state and the degree of curvature in the curved state based on outputs from one or more of the screen reflection estimation circuitry 204, the content type analysis circuitry 206, and the user interaction analysis circuitry 208 (block 1016). For example, the screen adjustment determination circuitry 210 can determine whether the display screen 108 should be in the flat state or the curved state and, if in the curved state, the degree of curvature by implementing the screen adjustment rule(s) 216 and/or the screen adjustment algorithm(s) and/or model(s) 218 based on factors such as number of users, user distance from the display screen 108, effects of light reflection, and type of content being presented on the display screen 108.

In examples in which the orientation of the display screen 108 is adjustable (e.g., via the screen orientation pivot 136), the screen adjustment determination circuitry 210 determines if the orientation of the display screen 108 should be adjusted (e.g., rotated about a horizontal axis and/or vertical axis extending through the screen orientation pivot 136, turned to a vertical or a horizontal orientation) (blocks 1018, 1020). In some examples, the screen adjustment determination circuitry 210 determines that the orientation of the display screen 108 should be adjusted to mitigate the effects of light reflections when the display screen 108 is in a curved state instead of causing the display screen 108 to move the flat state to reduce light reflections, as disclosed in connection with FIGS. 8 and 9. Thus, in examples in which the screen orientation is adjustable, the screen adjustment determination circuitry 210 can refine the determinations made with respect to the screen curvature state by adjusting screen orientation.

At block 1022, the screen adjustment determination circuitry 210 generates and outputs instruction(s) regarding a screen curvature state of the display screen 108 (e.g., flat, curved), a degree of curvature of the display screen 108 in the curved state, and, in some examples, an orientation of the display screen 108. The screen adjustment determination circuitry 210 transmits the instructions to the arm actuator control circuitry 132 of the display 104 to cause the arm actuator(s) 128 to move the display screen 108 to the determined state and, if applicable, curvature radius, and/or to the pivot actuator control circuitry 140 to control the screen orientation based on the screen adjustment instruction(s).

The screen adjustment determination circuitry 210 monitors for changes in one or more screen adjustment parameter(s) (e.g., user presence, user distance, ambient light sources, content type) based on the outputs of one or more of the user detection circuitry 200, the user identification circuitry 202, the screen reflection estimation circuitry 204, and/or the content type analysis circuitry 206, the user interaction analysis circuitry 208 (block 1024). In examples in which change(s) are detected, the example instructions 1000 return to evaluating the screen curvature state and/or screen orientation decisions. The example instructions 1000 end at block 1026 with continued monitoring of the usage and/or content parameter(s) associated with the display screen 108.

FIG. 11 is a block diagram of an example programmable circuitry platform 1100 structured to execute and/or instantiate the example machine-readable instructions and/or the example operations of FIG. 10 to implement the flexible screen control circuitry 144 of FIG. 2. The programmable circuitry platform 1100 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a headset (e.g., an augmented reality (AR) headset, a virtual reality (VR) headset, etc.) or other wearable device, or any other type of computing and/or electronic device.

The programmable circuitry platform 1100 of the illustrated example includes programmable circuitry 1112. The programmable circuitry 1112 of the illustrated example is hardware. For example, the programmable circuitry 1112 can be implemented by one or more integrated circuits, logic circuits, FPGAs, microprocessors, CPUs, GPUs, DSPs, and/or microcontrollers from any desired family or manufacturer. The programmable circuitry 1112 may be implemented by one or more semiconductor based (e.g., silicon based) devices. In this example, the programmable circuitry 1112 implements the user detection circuitry 200, the user identification circuitry 202, the screen reflection estimation circuitry 204, the content type analysis circuitry 206, the user interaction analysis circuitry 208, and the screen adjustment determination circuitry 210.

The programmable circuitry 1112 of the illustrated example includes a local memory 1113 (e.g., a cache, registers, etc.). The programmable circuitry 1112 of the illustrated example is in communication with main memory 1114, 1116, which includes a volatile memory 1114 and a non-volatile memory 1116, by a bus 1118. The volatile memory 1114 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1116 may be implemented by flash memory and/or any other desired type of memory device. Access to the main memory 1114, 1116 of the illustrated example is controlled by a memory controller 1117. In some examples, the memory controller 1117 may be implemented by one or more integrated circuits, logic circuits, microcontrollers from any desired family or manufacturer, or any other type of circuitry to manage the flow of data going to and from the main memory 1114, 1116.

The programmable circuitry platform 1100 of the illustrated example also includes interface circuitry 1120. The interface circuitry 1120 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 1122 are connected to the interface circuitry 1120. The input device(s) 1122 permit(s) a user (e.g., a human user, a machine user, etc.) to enter data and/or commands into the programmable circuitry 1112. The input device(s) 1122 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1124 are also connected to the interface circuitry 1120 of the illustrated example. The output device(s) 1124 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1120 of the illustrated example, thus, typically includes a graphics driver card, a graphics driver chip, and/or graphics processor circuitry such as a GPU.

The interface circuitry 1120 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1126. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1100 of the illustrated example also includes one or more mass storage discs or devices 1128 to store firmware, software, and/or data. Examples of such mass storage discs or devices 1128 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 1132, which may be implemented by the machine-readable instructions of FIG. 10, may be stored in the mass storage device 1128, in the volatile memory 1114, in the non-volatile memory 1116, and/or on at least one non-transitory computer-readable storage medium such as a CD or DVD which may be removable.

FIG. 12 is a block diagram of an example implementation of the programmable circuitry 1112 of FIG. 11. In this example, the programmable circuitry 1112 of FIG. 11 is implemented by a microprocessor 1200. For example, the microprocessor 1200 may be a general-purpose microprocessor (e.g., general-purpose microprocessor circuitry). The microprocessor 1200 executes some or all of the machine-readable instructions of the flowchart of FIG. 10 to effectively instantiate the circuitry of FIG. 2 as logic circuits to perform operations corresponding to those machine-readable instructions. In some such examples, the circuitry of FIG. 2 is instantiated by the hardware circuits of the microprocessor 1200 in combination with the machine-readable instructions. For example, the microprocessor 1200 may be implemented by multi-core hardware circuitry such as a CPU, a DSP, a GPU, an XPU, etc. Although it may include any number of example cores 1202 (e.g., 1 core), the microprocessor 1200 of this example is a multi-core semiconductor device including N cores. The cores 1202 of the microprocessor 1200 may operate independently or may cooperate to execute machine-readable instructions. For example, machine code corresponding to a firmware program, an embedded software program, or a software program may be executed by one of the cores 1202 or may be executed by multiple ones of the cores 1202 at the same or different times. In some examples, the machine code corresponding to the firmware program, the embedded software program, or the software program is split into threads and executed in parallel by two or more of the cores 1202. The software program may correspond to a portion or all of the machine-readable instructions and/or operations represented by the flowchart of FIG. 10.

The cores 1202 may communicate by a first example bus 1204. In some examples, the first bus 1204 may be implemented by a communication bus to effectuate communication associated with one(s) of the cores 1202. For example, the first bus 1204 may be implemented by at least one of an Inter-Integrated Circuit (I2C) bus, a Serial Peripheral Interface (SPI) bus, a PCI bus, or a PCIe bus. Additionally or alternatively, the first bus 1204 may be implemented by any other type of computing or electrical bus. The cores 1202 may obtain data, instructions, and/or signals from one or more external devices by example interface circuitry 1206. The cores 1202 may output data, instructions, and/or signals to the one or more external devices by the interface circuitry 1206. Although the cores 1202 of this example include example local memory 1220 (e.g., Level 1 (L1) cache that may be split into an L1 data cache and an L1 instruction cache), the microprocessor 1200 also includes example shared memory 1210 that may be shared by the cores (e.g., Level 2 (L2 cache)) for high-speed access to data and/or instructions. Data and/or instructions may be transferred (e.g., shared) by writing to and/or reading from the shared memory 1210. The local memory 1220 of each of the cores 1202 and the shared memory 1210 may be part of a hierarchy of storage devices including multiple levels of cache memory and the main memory (e.g., the main memory 1114, 1116 of FIG. 11). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1202 may be referred to as a CPU, DSP, GPU, etc., or any other type of hardware circuitry. Each core 1202 includes control unit circuitry 1214, arithmetic and logic (AL) circuitry (sometimes referred to as an ALU) 1216, a plurality of registers 1218, the local memory 1220, and a second example bus 1222. Other structures may be present. For example, each core 1202 may include vector unit circuitry, single instruction multiple data (SIMD) unit circuitry, load/store unit (LSU) circuitry, branch/jump unit circuitry, floating-point unit (FPU) circuitry, etc. The control unit circuitry 1214 includes semiconductor-based circuits structured to control (e.g., coordinate) data movement within the corresponding core 1202. The AL circuitry 1216 includes semiconductor-based circuits structured to perform one or more mathematic and/or logic operations on the data within the corresponding core 1202. The AL circuitry 1216 of some examples performs integer based operations. In other examples, the AL circuitry 1216 also performs floating-point operations. In yet other examples, the AL circuitry 1216 may include first AL circuitry that performs integer-based operations and second AL circuitry that performs floating-point operations. In some examples, the AL circuitry 1216 may be referred to as an Arithmetic Logic Unit (ALU).

The registers 1218 are semiconductor-based structures to store data and/or instructions such as results of one or more of the operations performed by the AL circuitry 1216 of the corresponding core 1202. For example, the registers 1218 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1218 may be arranged in a bank as shown in FIG. 12. Alternatively, the registers 1218 may be organized in any other arrangement, format, or structure, such as by being distributed throughout the core 1202 to shorten access time. The second bus 1222 may be implemented by at least one of an I2C bus, a SPI bus, a PCI bus, or a PCIe bus.

Each core 1202 and/or, more generally, the microprocessor 1200 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1200 is a semiconductor device fabricated to include many transistors interconnected to implement the structures described above in one or more integrated circuits (ICs) contained in one or more packages.

The microprocessor 1200 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1200, in the same chip package as the microprocessor 1200 and/or in one or more separate packages from the microprocessor 1200.

FIG. 13 is a block diagram of another example implementation of the programmable circuitry 1112 of FIG. 11. In this example, the programmable circuitry 1112 is implemented by FPGA circuitry 1300. For example, the FPGA circuitry 1300 may be implemented by an FPGA. The FPGA circuitry 1300 can be used, for example, to perform operations that could otherwise be performed by the example microprocessor 1200 of FIG. 12 executing corresponding machine-readable instructions. However, once configured, the FPGA circuitry 1300 instantiates the operations and/or functions corresponding to the machine-readable instructions in hardware and, thus, can often execute the operations/functions faster than they could be performed by a general-purpose microprocessor executing the corresponding software.

More specifically, in contrast to the microprocessor 1200 of FIG. 12 described above (which is a general purpose device that may be programmed to execute some or all of the machine-readable instructions represented by the flowchart of FIG. 10 but whose interconnections and logic circuitry are fixed once fabricated), the FPGA circuitry 1300 of the example of FIG. 13 includes interconnections and logic circuitry that may be configured, structured, programmed, and/or interconnected in different ways after fabrication to instantiate, for example, some or all of the operations/functions corresponding to the machine-readable instructions represented by the flowchart of FIG. 10. In particular, the FPGA circuitry 1300 may be thought of as an array of logic gates, interconnections, and switches. The switches can be programmed to change how the logic gates are interconnected by the interconnections, effectively forming one or more dedicated logic circuits (unless and until the FPGA circuitry 1300 is reprogrammed). The configured logic circuits enable the logic gates to cooperate in different ways to perform different operations on data received by input circuitry. Those operations may correspond to some or all of the instructions (e.g., the software and/or firmware) represented by the flowchart of FIG. 10. As such, the FPGA circuitry 1300 may be configured and/or structured to effectively instantiate some or all of the operations/functions corresponding to the machine-readable instructions of the flowchart of FIG. 10 as dedicated logic circuits to perform the operations/functions corresponding to those software instructions in a dedicated manner analogous to an ASIC. Therefore, the FPGA circuitry 1300 may perform the operations/functions corresponding to the some or all of the machine-readable instructions of FIG. 10 faster than the general-purpose microprocessor can execute the same.

In the example of FIG. 13, the FPGA circuitry 1300 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1300 of FIG. 13 may access and/or load the binary file to cause the FPGA circuitry 1300 of FIG. 13 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1300 of FIG. 13 to cause configuration and/or structuring of the FPGA circuitry 1300 of FIG. 13, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1300 of FIG. 13 may access and/or load the binary file to cause the FPGA circuitry 1300 of FIG. 13 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1300 of FIG. 13 to cause configuration and/or structuring of the FPGA circuitry 1300 of FIG. 13, or portion(s) thereof.

The FPGA circuitry 1300 of FIG. 13, includes example input/output (I/O) circuitry 1302 to obtain and/or output data to/from example configuration circuitry 1304 and/or external hardware 1306. For example, the configuration circuitry 1304 may be implemented by interface circuitry that may obtain a binary file, which may be implemented by a bit stream, data, and/or machine-readable instructions, to configure the FPGA circuitry 1300, or portion(s) thereof. In some such examples, the configuration circuitry 1304 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1306 may be implemented by external hardware circuitry. For example, the external hardware 1306 may be implemented by the microprocessor 1200 of FIG. 12.

The FPGA circuitry 1300 also includes an array of example logic gate circuitry 1308, a plurality of example configurable interconnections 1310, and example storage circuitry 1312. The logic gate circuitry 1308 and the configurable interconnections 1310 are configurable to instantiate one or more operations/functions that may correspond to at least some of the machine-readable instructions of FIG. 10 and/or other desired operations. The logic gate circuitry 1308 shown in FIG. 13 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1308 to enable configuration of the electrical structures and/or the logic gates to form circuits to perform desired operations/functions. The logic gate circuitry 1308 may include other electrical structures such as look-up tables (LUTs), registers (e.g., flip-flops or latches), multiplexers, etc.

The configurable interconnections 1310 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1308 to program desired logic circuits.

The storage circuitry 1312 of the illustrated example is structured to store result(s) of the one or more of the operations performed by corresponding logic gates. The storage circuitry 1312 may be implemented by registers or the like. In the illustrated example, the storage circuitry 1312 is distributed amongst the logic gate circuitry 1308 to facilitate access and increase execution speed.

The example FPGA circuitry 1300 of FIG. 13 also includes example dedicated operations circuitry 1314. In this example, the dedicated operations circuitry 1314 includes special purpose circuitry 1316 that may be invoked to implement commonly used functions to avoid the need to program those functions in the field. Examples of such special purpose circuitry 1316 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1300 may also include example general purpose programmable circuitry 1318 such as an example CPU 1320 and/or an example DSP 1322. Other general purpose programmable circuitry 1318 may additionally or alternatively be present such as a GPU, an XPU, etc., that can be programmed to perform other operations.

Although FIGS. 12 and 13 illustrate two example implementations of the programmable circuitry 1112 of FIG. 11, many other approaches are contemplated. For example, FPGA circuitry may include an on-board CPU, such as one or more of the example CPU 1320 of FIG. 12. Therefore, the programmable circuitry 1112 of FIG. 11 may additionally be implemented by combining at least the example microprocessor 1200 of FIG. 12 and the example FPGA circuitry 1300 of FIG. 13. In some such hybrid examples, one or more cores 1202 of FIG. 12 may execute a first portion of the machine-readable instructions represented by the flowchart of FIG. 10 to perform first operation(s)/function(s), the FPGA circuitry 1300 of FIG. 13 may be configured and/or structured to perform second operation(s)/function(s) corresponding to a second portion of the machine-readable instructions represented by the flowchart of FIG. 10, and/or an ASIC may be configured and/or structured to perform third operation(s)/function(s) corresponding to a third portion of the machine-readable instructions represented by the flowchart of FIG. 10.

It should be understood that some or all of the circuitry of FIG. 2 may, thus, be instantiated at the same or different times. For example, same and/or different portion(s) of the microprocessor 1200 of FIG. 12 may be programmed to execute portion(s) of machine-readable instructions at the same and/or different times. In some examples, same and/or different portion(s) of the FPGA circuitry 1300 of FIG. 13 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 1200 of FIG. 12 may execute machine-readable instructions in one or more threads executing concurrently and/or in series. In some examples, the FPGA circuitry 1300 of FIG. 13 may be configured and/or structured to carry out operations/functions concurrently and/or in series. Moreover, in some examples, some or all of the circuitry of FIG. 2 may be implemented within one or more virtual machines and/or containers executing on the microprocessor 1200 of FIG. 12.

In some examples, the programmable circuitry 1112 of FIG. 11 may be in one or more packages. For example, the microprocessor 1200 of FIG. 12 and/or the FPGA circuitry 1300 of FIG. 13 may be in one or more packages. In some examples, an XPU may be implemented by the programmable circuitry 1112 of FIG. 11, which may be in one or more packages. For example, the XPU may include a CPU (e.g., the microprocessor 1200 of FIG. 12, the CPU 1320 of FIG. 13, etc.) in one package, a DSP (e.g., the DSP 1322 of FIG. 13) in another package, a GPU in yet another package, and an FPGA (e.g., the FPGA circuitry 1300 of FIG. 13) in still yet another package.

A block diagram illustrating an example software distribution platform 1405 to distribute software such as the example machine-readable instructions 1132 of FIG. 11 to other hardware devices (e.g., hardware devices owned and/or operated by third parties from the owner and/or operator of the software distribution platform) is illustrated in FIG. 14. The example software distribution platform 1405 may be implemented by any computer server, data facility, cloud service, etc., capable of storing and transmitting software to other computing devices. The third parties may be customers of the entity owning and/or operating the software distribution platform 1405. For example, the entity that owns and/or operates the software distribution platform 1405 may be a developer, a seller, and/or a licensor of software such as the example machine-readable instructions 1132 of FIG. 11. The third parties may be consumers, users, retailers, OEMs, etc., who purchase and/or license the software for use and/or re-sale and/or sub-licensing. In the illustrated example, the software distribution platform 1405 includes one or more servers and one or more storage devices. The storage devices store the machine-readable instructions 1132, which may correspond to the example machine-readable instructions of FIG. 10, as described above. The one or more servers of the example software distribution platform 1405 are in communication with an example network 1410, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third-party payment entity. The servers enable purchasers and/or licensors to download the machine-readable instructions 1132 from the software distribution platform 1405. For example, the software, which may correspond to the example machine-readable instructions of FIG. 10, may be downloaded to the example programmable circuitry platform 1100, which is to execute the machine-readable instructions 1132 to implement the flexible screen control circuitry 144. In some examples, one or more servers of the software distribution platform 1405 periodically offer, transmit, and/or force updates to the software (e.g., the example machine-readable instructions 1132 of FIG. 11) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a," "an," "first," "second," etc.) do not exclude a plurality. The term "a" or "an" object, as used herein, refers to one or more of that object. The terms "a" (or "an"), "one or more," and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example, an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that provide for intelligent and adaptive control of flexible displays with respect to screen curvature and/or orientation. Examples disclosed herein determine whether a screen should be in a flat state or a curved state based on a various factors such as a distance of a user from the display screen, a number of users viewing the display screen, ambient lighting conditions, a type of content being presented on the display screen, etc. Further, examples disclosed herein weigh the factor(s) or combination of factors to determine to the determine the degree of curvature or curvature radius when the screen is to be placed in a curved state. Examples disclosed herein provide for dynamic adjustments to screen curvature and/or orientation based on one or more parameters indicative of usage and/or content context in connection with the display screen.

Example systems and method for controlling flexible displays are disclosed herein. Further examples and combinations thereof include the following:
Example 1 includes an apparatus comprising interface circuitry; machine-readable instructions; and at least one processor circuit to at least one of instantiate or execute the machine-readable instructions to determine a distance of a user relative to a display screen based on outputs of a sensor, the sensor in communication with one or more of the at least one processor circuit; determine a curvature radius of the display screen based on the user distance; and cause an actuator to adjust a curvature of the display screen based on the curvature radius.
Example 2 includes the apparatus of example 1, wherein the outputs of the sensor correspond to image data and wherein one or more of the at least one processor circuit is to determine the distance of the user from the display screen based on the image data.
Example 3 includes the apparatus of examples 1 or 2, wherein the sensor is a first sensor and wherein one or more of the at least one processor circuit is to determine an ambient lighting condition in an environment including the display screen based on the outputs of the first sensor or outputs of a second sensor, the second sensor in communication with one or more of the at least one processor circuit; and determine the curvature radius based on the user distance and the ambient lighting condition.
Example 4 includes the apparatus of any of examples 1-3, wherein the actuator is a first actuator and wherein one or more of the at least one processor circuit is to cause a second actuator to adjust an orientation of the display screen based on the ambient lighting condition.
Example 5 includes the apparatus of any of examples 1-4, wherein the user is a first user and wherein one or more of the at least one processor circuit is to detect a presence of a second user relative to the display screen, the second user with the first user; determine a first position of the first user relative to the display screen; determine a second position of the second user relative to the display screen; and cause the display screen to move from a first state associated with the curvature radius to a second state based on the first position of the first user and the second position of the second user, the second state corresponding to a flat state of the display screen.
Example 6 includes the apparatus of any of examples 1-5, wherein the outputs of the sensor are associated with a first time and wherein one or more of the at least one processor circuit is to identify one or more an application type or an application usage event associated with execution of an application at a first time, the application installed on the apparatus; and determine the curvature radius based on the user distance and the one or more of the application type or the application usage event.
Example 7 includes the apparatus of any of examples 1-6, wherein the user is a first user, the outputs of the sensor are associated with a first time, and wherein one or more of the at least one processor circuit is to determine a position of a second user relative to the display screen at a second time after the first time; identify the second user as associated with a user profile, the user profile defining a first curvature radius for the display screen; and cause the actuator to adjust the curvature of the display screen based on the first curvature radius in the user profile.
Example 8 includes an electronic device comprising a display screen movable between a flat state and a curved state; a sensor; machine-readable instructions; and at least one processor circuit to at least one of instantiate or execute the machine-readable instructions to determine a distance of a user relative to the display screen based on outputs of the sensor; perform a comparison of the user distance to a screen distance threshold; when the user distance satisfies the screen distance threshold, cause the display screen to be in the curved state; and when the user distance exceeds the screen distance threshold, cause the display screen to be in the flat state.
Example 9 includes the electronic device of example 8, wherein the sensor is an image sensor.
Example 10 includes the electronic device of examples 8 or 9, wherein when the user distance satisfies the screen distance threshold, one or more of the at least one processor circuit is to determine a curvature radius of the display screen in the curved state; and cause the display screen to be in the curved state having the determined curvature radius.
Example 11 includes the electronic device of any of examples 8-10, wherein the outputs of the sensor are associated with a first time and one or more of the least one processor circuit is to identify a type of content presented on the display screen at the first time; and determine the curvature radius based on the type of content.
Example 12 includes the electronic device of any of examples 8-11, wherein the curvature radius is a first curvature radius and wherein one or more of the least one processor circuit is to identify a position of the user relative to the display screen; identify a light source in an environment including the electronic device; determine a path of light emitted by the light source and reflected by the display screen relative to the position of the user when the display screen has the first curvature radius; and cause the display screen to adjust the first curvature radius to a second curvature radius based on the path of the light.
Example 13 includes the electronic device of any of examples 8-12, wherein one or more of the at least one processor circuit is to cause an orientation of the display screen to be adjusted when the display screen is in the curved state or the flat state.
Example 14 includes the electronic device of any of examples 8-13, wherein one or more of the at least one processor circuit is to identify the user as associated with a user profile, the user profile defining a first curvature radius for the curved state of the display screen; and cause the display screen to have the first curvature radius when the display screen is in the curved state.
Example 15 includes the electronic device of any of examples 8-14, wherein the user is a first user, the distance satisfies the screen distance threshold, the display screen is in the curved state a first time, and wherein one or more of the at least one processor circuit is to detect a presence of a second user relative to the display screen with the first user at a second time after the first time; and responsive to the detection of the second user, cause the display screen to move from the curved state to the flat state.
Example 16 includes the electronic device of any of examples 8-15, wherein the screen distance threshold corresponds to a curvature radius associated with a minimum curvature of the display screen.
Example 17 includes a non-transitory machine-readable storage medium comprising instructions to cause at least one processor circuit to at least detect a presence of a user relative to a display screen; determine a distance of the user from the display screen; and cause the display screen to move (a) from a flat state to a curved state or (b) from the curved state to the flat state based on the distance of the user from the display screen.
Example 18 includes the non-transitory machine-readable storage medium of example 17, wherein the machine-readable instructions are to cause one or more of the at least one processor circuit to cause the display screen to move from the flat state to the curved state when the distance of the user from the display screen is within a threshold distance.
Example 19 includes the non-transitory machine-readable storage medium of examples 17 or 18, wherein the machine-readable instructions are to cause one or more of the at least one processor circuit to recognize content presented on the display screen; and cause the display screen to move from the flat state to the curved state based on the threshold distance and the content.
Example 20 includes the non-transitory machine-readable storage medium of any of examples 17-19, wherein the user is a first user, the display screen is in the flat state at a first time, and wherein the machine-readable instructions are to cause one or more of the at least one processor circuit to detect a presence of second user relative to the display screen with the first user at a second time after the first time; and responsive to the detection of the second user, cause the display screen to move from the curved state to the flat state.
Example 21 includes the non-transitory machine-readable storage medium of any of examples 17-20, wherein the machine-readable instructions are to cause one or more of the at least one processor circuit to determine the distance of the user from the display screen based on image data.
Example 22 includes an electronic device comprising a display screen having a flat state and a curved state; an actuator to cause to the display screen to move between the flat state and the curved state; a sensor; means for detecting a presence of a user, the means for detecting to determine a distance of the user relative to the display screen based on outputs of the sensor; and means for determining a screen adjustment, the means for determining to determine a curvature radius for the display screen in the curved state based on the user distance and a type of content presented by the display screen; and cause the actuator to move display screen to the curved state having the curvature radius.
Example 23 includes the electronic device of example 22, further including means for analyzing content type, the means for analyzing content type to determine the type of content based on application event data for an application installed on the electronic device.
Example 24 includes the electronic device of examples 22 or 23, further including means for analyzing user interaction, the means for analyzing user interaction to detect a user input at the electronic device and verify the type of content based on the user input.
Example 25 includes the electronic device of any of examples 22-24, further including means for estimating screen reflectance, the means for estimating screen reflectance to determine a likelihood of reflectance of light by the display screen based on a location of a light source in an environment including the electronic device; and adjust the curvature radius based on the likelihood of the reflectance of the light to generate an adjusted curvature radius, the means for determining to cause the actuator to move the display screen to the curved state having the adjusted curvature radius.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. An electronic device comprising:
a display screen movable between a flat state and a curved state;
a sensor;
machine-readable instructions; and
at least one processor circuit to at least one of instantiate or execute the machine-readable instructions to:
determine a distance of a user relative to the display screen based on outputs of the sensor;
perform a comparison of the user distance to a screen distance threshold;
when the user distance satisfies the screen distance threshold, cause the display screen to be in the curved state; and
when the user distance exceeds the screen distance threshold, cause the display screen to be in the flat state.

2. The electronic device of claim 1, wherein the sensor is an image sensor.

3. The electronic device of claim 1, wherein when the user distance satisfies the screen distance threshold, one or more of the at least one processor circuit is to:
determine a curvature radius of the display screen in the curved state; and
cause the display screen to be in the curved state having the determined curvature radius.

4. The electronic device of claim 3, wherein the outputs of the sensor are associated with a first time and one or more of the least one processor circuit is to:
identify a type of content presented on the display screen at the first time; and
determine the curvature radius based on the type of content.

5. The electronic device of claim 3, wherein the curvature radius is a first curvature radius and wherein one or more of the least one processor circuit is to:
identify a position of the user relative to the display screen;
identify a light source in an environment including the electronic device;
determine a path of light emitted by the light source and reflected by the display screen relative to the position of the user when the display screen has the first curvature radius; and
cause the display screen to adjust the first curvature radius to a second curvature radius based on the path of the light.

6. The electronic device of claim 1, wherein one or more of the at least one processor circuit is to cause an orientation of the display screen to be adjusted when the display screen is in the curved state or the flat state.

7. The electronic device of claim 1, wherein one or more of the at least one processor circuit is to:
identify the user as associated with a user profile, the user profile defining a first curvature radius for the curved state of the display screen; and
cause the display screen to have the first curvature radius when the display screen is in the curved state.

8. The electronic device of any of claims 1-7, wherein the user is a first user, the distance satisfies the screen distance threshold, the display screen is in the curved state a first time, and wherein one or more of the at least one processor circuit is to:
detect a presence of a second user relative to the display screen with the first user at a second time after the first time; and
responsive to the detection of the second user, cause the display screen to move from the curved state to the flat state.

9. The electronic device of any of claims 1-7, wherein the screen distance threshold corresponds to a curvature radius associated with a minimum curvature of the display screen.

10. A non-transitory machine-readable storage medium comprising instructions to cause at least one processor circuit to at least:
detect a presence of a user relative to a display screen;
determine a distance of the user from the display screen; and
cause the display screen to move (a) from a flat state to a curved state or (b) from the curved state to the flat state based on the distance of the user from the display screen.

11. The non-transitory machine-readable storage medium of claim 10, wherein the machine-readable instructions are to cause one or more of the at least one processor circuit to:
cause the display screen to move from the flat state to the curved state when the distance of the user from the display screen is within a threshold distance;
recognize content presented on the display screen; and
cause the display screen to move from the flat state to the curved state based on the threshold distance and the content.

12. An electronic device comprising:
a display screen having a flat state and a curved state;
an actuator to cause to the display screen to move between the flat state and the curved state;
a sensor;
means for detecting a presence of a user, the means for detecting to determine a distance of the user relative to the display screen based on outputs of the sensor; and
means for determining a screen adjustment, the means for determining to:
determine a curvature radius for the display screen in the curved state based on the user distance and a type of content presented by the display screen; and
cause the actuator to move display screen to the curved state having the curvature radius.

13. The electronic device of claim 12, further including means for analyzing content type, the means for analyzing content type to determine the type of content based on application event data for an application installed on the electronic device.

14. The electronic device of claim 12, further including means for analyzing user interaction, the means for analyzing user interaction to detect a user input at the electronic device and verify the type of content based on the user input.

15. The electronic device of any of claims 12-14, further including means for estimating screen reflectance, the means for estimating screen reflectance to:
determine a likelihood of reflectance of light by the display screen based on a location of a light source in an environment including the electronic device; and
adjust the curvature radius based on the likelihood of the reflectance of the light to generate an adjusted curvature radius, the means for determining to cause the actuator to move the display screen to the curved state having the adjusted curvature radius.
